# FASCICULE DE BREVET EUROPEEN

(11) **EP 0 976 321 B1**
(45) Date de publication et mention de la délivrance du brevet: **15.11.2000**
(21) Numéro de dépôt: 99401866.1
(22) Date de dépôt: 23.07.1999
(51) Int. Cl.: A01K 1/06

(54) **Barrière à cornadis comportant des anti-passages**
Einsperrgitter mit Absperrungen
Stanchion with barriers

(30) Priorité: 30.07.1998 FR 9809745
(43) Date de publication de la demande: 02.02.2000
(73) Titulaire: Etablissements Jourdain Société Anonyme, 45300 Pithiviers (FR)
(72) Inventeur: Jourdain, Martial Maurica Marcel, 45300 Escrennes (FR)
(74) Mandataire: Vander-Heym, Serge

(56) Documents cités:
- FR-A- 1 346 238

## Description

La présente invention est relative à des perfectionnements aux barrières à cornadis et, plus particulièrement, à celles comportant des anti-passages.

Par anti-passage, on désigne un moyen qui empêche un animal de petite taille de passer la tête à travers la barrière au droit du bras pivotant du cornadis, que celui-ci soit ouvert ou fermé.

Un tel moyen est nécessaire lorsque la taille des animaux n'est pas homogène, c'est tout particulièrement le cas lorsque les veaux côtoient les mères.

En l'état actuel de la technique, on utilise un anti-passage réalisé à partir d'une barre s'étendant parallèlement au bras pivotant et présentant à chacune de ses extrémités une partie recourbée, sensiblement à angle droit, soudée sur ledit bras. Voir p.e. le document FR-A-1 346 238.

Cette pièce, qui se présente sous la forme d'un U, est difficile à fixer par soudage étant donné qu'il faut souder entre elles deux pièces cylindriques dont l'axe de l'une est orthogonal à celui de l'autre. L'expérience a montré que la soudure ne pouvait pas être automatisée et qu'il fallait recourir au soudage manuel.

La présente invention, qui remédie à ces inconvénients, est remarquable en ce que les extrémités de la pièce en forme d'U son recourbées vers l'intérieur de façon à ce que l'axe de chacune des parties recourbées s'étende, sensiblement, parallèlement à l'axe du bras pivotant.

L'invention sera mieux comprise par la description qui va suivre faite en se référant aux dessins annexés à titre d'exemple indicatif,, seulement, sur lesquels :
- la figure 1 est une vue partielle d'une barrière à cornadis comportant des anti-passages d'un type connu;
- la figure 2 est une vue en coupe, à plus grande échelle, effectuée selon la ligne II-II de la figure 1;

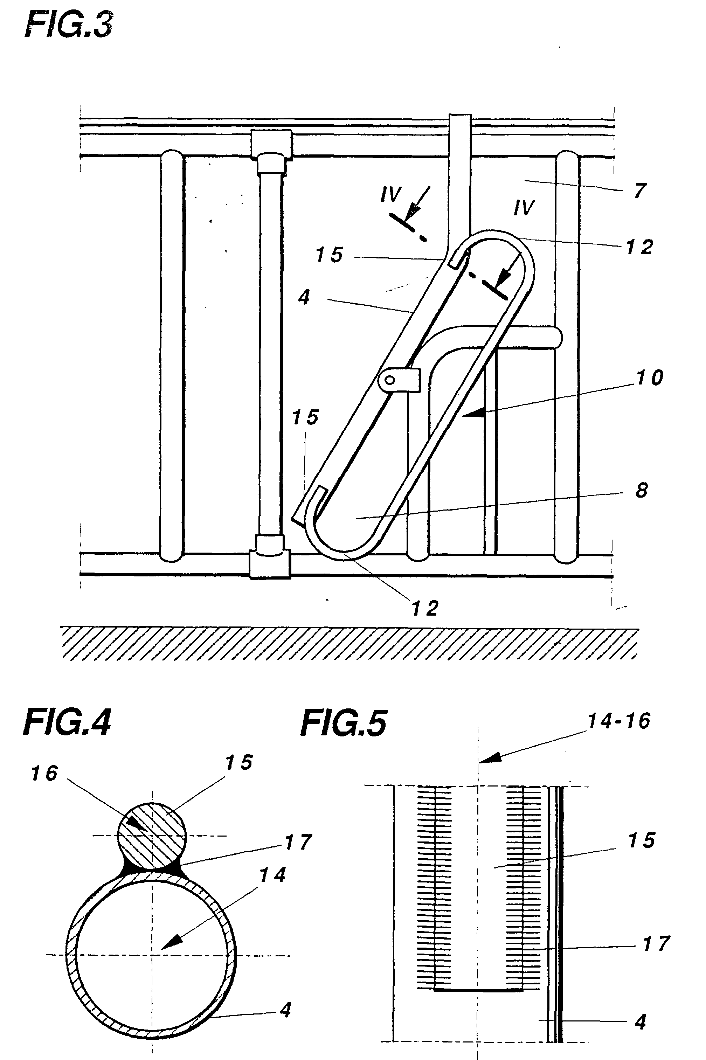

- la figure 3 est une vue, analogue à la figure 1, montrant un anti-passage réalisé conformément à l'invention;
- la figure 4 est une vue en coupe, à plus grande échelle, effectuée selon la ligne IV-IV de la figure 2;
- la figure 5 est la vue de dessus de la figure 4.

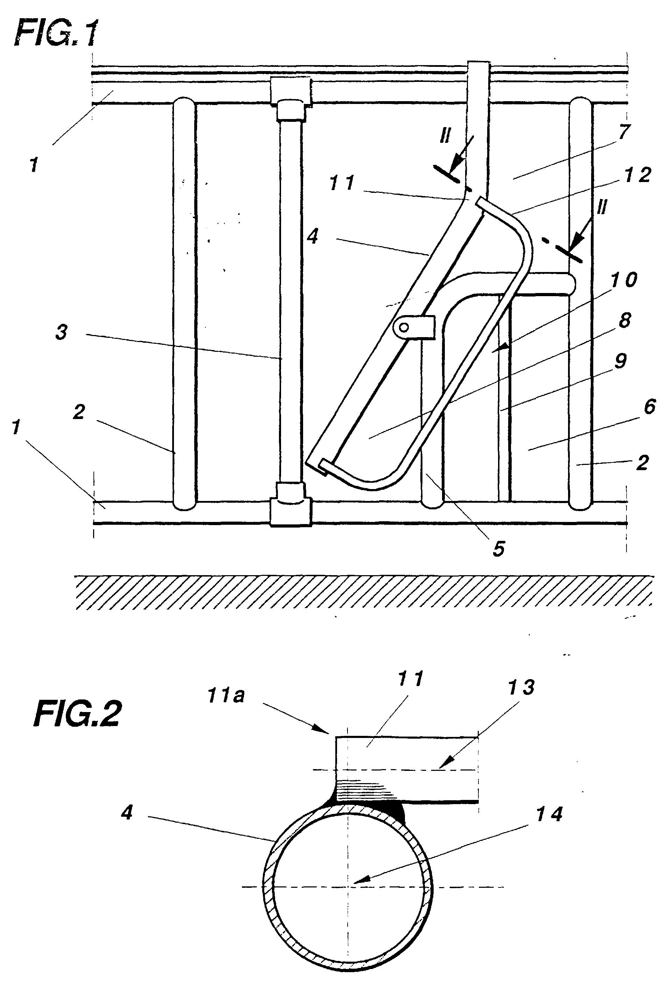

En se reportant à la figure 1, on voit que, de la façon connue, la barrière est composée de lisses 1 réunies par des montants 2 délimitant un espace comportant un montant 3, réglable latéralement et un bras pivotant 4 articulé en un point de sa longueur sur un arceau 5.

Dans la position représentée, selon laquelle l'animal peut accéder librement à la mangeoire placée de l'autre côté de la barrière, il subsiste trois espaces, respectivement 6, 7 et 8, dangereux pour des animaux de petite taille ( veaux ou jeunes génisses).

Le premier, délimité par un montant, par la lisse inférieure et par l'arceau 5 est obturé par un barreau 9 et ne pose donc pas de problème.

Les deux autres espaces 7 et 8, situés respectivement au-dessus de la pièce 5 et au-dessous de la partie inférieure du bras pivotant sont obturés par un anti-passage constitué par un étrier 10 dont la partie médiane s'étend parallèlement à l'axe du bras pivotant. Les extrémités 11 des branches 12 de l'étrier 10 sont soudées sur le bras 4. Comme cela ressort des figures 1 et 2, les axes 13 des extrémités 11 et celui 14 du bras pivotant sont disposés orthogonalement ce qui rend l'opération de soudage particulièrement délicate et ne permet pas l'utilisation de machines de soudage automatisées.

Il faut signaler aussi que les extrémités 11 présentent une partie saillante lla susceptible de blesser le cou de l'animal.

Selon la présente invention, qui remédie à cet inconvénient, les extrémités de l'étrier anti-passage sont recourbées vers l'intérieur pour former deux pattes 15 dont les axes 16 s'étendent parallèlement à celui 14 du bras 4.

De cette façon, la fixation de l'anti-passage s'effectue par l'entremise de cordons de soudure 17, linéaires et parallèles, autorisant l'utilisation de machines de soudage automatisées.

Il faut ajouter, que la fixation est particulièrement efficace puisque rien ne s'oppose à l'augmentation de la longueur des cordons de soudure 17.

Selon une autre caractéristique de l'invention, les branches 12 affectent chacune, sensiblement, la forme d'un arc de cercle s'étendant vers l'extérieur, de préférence, sur cent quatre vingt degrés: De cette façon, on obtient une meilleure obturation des espaces 7 et 8. Il est à noter que, contrairement au dispositif connu, celui de l'invention permet d'obturer l'espace situé entre la lisse inférieure et l'extrémité inférieure du bras. Comme la branche inférieure 12 peut s'étendre devant la lisse inférieure, les risques d'accrochage du collier d'identification usuel de l'animal sont ainsi évités.

Chaque arc de cercle peut être remplacé par une ligne brisée présentant un aspect équivalent.

Le dispositif anti-passage, objet de l'invention, peut être double, l'un étant situé au-dessus de l'axe d'articulation du bras et l'autre au-dessous.

## Revendications

1. Barrière à cornadis comportant des anti-passages constitués, chacun, par une pièce en forme d'U (10) soudée par les extrémités de ses branches sur le bras pivotant (4), caractérisée en ce que les branches (12) de la pièce en forme d'U sont recourbées vers l'intérieur pour former deux pattes (15) dont les axes s'étendent, sensiblement, parallèlement à l'axe (14) dudit bras.

2. Barrière selon la revendication 1, caractérisée en ce que chaque branche (12) affecte sensiblement la forme d'un arc de cercle s'étendant vers l'extérieur.

## Patentansprüche

1. Barriere für Trenngitter, umfassend Mittel zur Durchgangsverhinderung, jedes gebildet durch ein U-förmiges Stück (10), das durch die äußeren Enden seiner Schenkel auf dem Schwenkarm (4) aufgeschweißt ist, dadurch gekennzeichnet, daß die Schenkel (12) des U-förmigen Stücks nach innen gebogen sind, um zwei Befestigungseisen (15) zu formen, deren Achsen sich deutlich parallel zur Achse (14) besagten Arms erstrecken.

2. Barriere gemäß Anspruch 1, dadurch gekennzeichnet, daß jeder Schenkel (12) deutlich die Form eines sich nach außen erstreckenden ringförmigen Bogens annimmt.

## Claims

1. Cornadis barrier comprising anti-passages each constituted by a U-shaped part (10) welded by the extremities of its branches onto the pivoting arm (4), characterised in that the branches (12) of the U-shaped part are inwardly bent so as to form two brackets (15) whose axes extend approximately parallel to the axis (14) of said arm.

2. Barrier according to claim 1, characterised in that each branch (12) approximately takes on the shape of an arc of a circle extending outwardly.
